# EUROPEAN PATENT APPLICATION

(11) **EP 2 071 844 A2**
(43) Date of publication of application: **17.06.2009**
(21) Application number: 08169572.8
(22) Date of filing: 20.11.2008
(51) Int. Cl.: H04N 7/173

(54) **Video processing apparatus and control methods**

(30) Priority: 13.12.2007 KR 20070129877
(71) Applicant: Samsung Electronics Co., Ltd., Suwon-si, Gyeonggi-do 442-742 (KR)
(72) Inventor: Lee, Hyeon-ji, Gyeonggi-do (KR); Lee, Chang-soo, Seoul (KR); Yoon, Yeo-ri, Gyeonggi-do (KR); Kim, Joon-hwan, Gyeonggi-do (KR)
(74) Representative: Fearnside, Andrew Simon

(57) **Abstract**

Video processing apparatus includes: a video receiving unit (100) to receive at least one of a plurality of video contents from a predetermined video supplying source; a video processing unit (200) to process the video contents to be displayed in a display unit; a communicating unit (400) to receive a watching order information of the video contents from a server; and a control unit (700) to display an order of the plurality of video contents in the display unit based on the received watching order information. Control methods accordingly.

## Description

### BACKGROUND OF THE INVENTION

### Field of the Invention

The present invention relates to video processing apparatus and control methods thereof, for example connected to (e.g. in communication with) a server (e.g. to enable a two-way communication), and more particularly though not exclusively, to video processing apparatus and control method(s) thereof for displaying a content information about a plurality of video contents.

### Description of the Related Art

A video processing apparatus such as a television, a set top box, etc., receives video content from the outside, and displays the video content as a video. The video processing apparatus may receive various video contents provided from a service such as terrestrial, satellite and cable broadcasting stations, and may selectively display the video contents.

However, the number of channels providing video contents continually increases, and a video processing apparatus has several hundreds of channels. To enable a user to select desired video content among the video contents of a lot of channels, a video supplying source such as a broadcasting station, etc., transmits electronic program guide (EPG) information together with the video contents, and the video processing apparatus receives and displays this so that the user can select the desired video content.

In the conventional video processing apparatus, the user selects one of a plurality of video contents for which the EPG information is displayed, and sets a reservation to watch or record the selected video content. However, as the number of the displayed video contents increases, it is inconvenient for the user to select a desired video content. For example, if a plurality of video contents are aligned and displayed in a channel number order, and the user wants to select a video content from a higher channel, the user must move a cursor up to the corresponding video content many times, and it is necessary for the user to continuously manipulate a cursor key of the remote controller.

### SUMMARY OF THE INVENTION

Accordingly, the present invention may provide video processing apparatus and control method(s) thereof for aligning and displaying content information about a plurality of video contents depending on a predetermined order most desirably to enable to easily select and determine a reservation for watching or a reservation for recording of the video contents.

In a first aspect, the invention provides video processing apparatus, comprising: a video receiving unit arranged to receive at least one of a plurality of video contents from a predetermined video supplying source; a video processing unit arranged to process the video contents to be displayed in a display unit; a communicating unit arranged to recieve a watching order information of the video contents from a server; and a control unit arranged to display an order of the plurality of video contents in the display unit based on the received watching order information.

The watching order information may comprise audience rating information of the video contents.

The communicating unit may be arranged to further receive category information which comprises at least one of a genre and a channel of the video contents from the server, and the control unit may be arranged to display the order of the video contents based on the category information.

The video processing apparatus may further comprise an input unit arranged to receive an input of a user, wherein the control unit is arranged to perform at least one of setting of a reservation watching and setting of a reservation recording for a video content which is designated by means of the input unit through the order of the plurality of video contents which are displayed (or to be displayed) in the display unit.

The control unit may be arranged to further display a broadcasting time of the video content.

The control unit may be arranged to display or record the video content to correspond to the setting of the reservation watching or the reservation recording.

In a second aspect, the invention provides a control method of video processing apparatus arranged to receive and to process at least one of a plurality of video contents from a predetermined video supplying source, the control method comprising: receiving watching order information of the video contents from a server; and displaying an order of the plurality of video contents based on the watching order information.

The receiving of the watching order information may comprise receiving an audience rating information of the video contents.

The receiving of watching order information may comprise receiving at least one of a genre and a channel of the video contents from the server, and the displaying of the order may comprise displaying the order of the video contents based on the category information.

The displaying of the order may comprise: designating at least one of a reservation watching and a reservation recording for at least one of the plurality of video contents through the displayed order of the plurality of video contents, and performing a setting for the corresponding video content to correspond to the designated content.

The performing of the setting may comprise displaying a broadcasting time of the video content.

The performing the setting may comprise displaying or recording the video content to correspond to the setting of the reservation watching or the reservation recording.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram illustrating a configuration of a video processing apparatus according to an exemplary embodiment of the present invention;
FIG. 2 illustrates an example displaying an order of a plurality of video contents in the video processing apparatus in FIG. 1; and
FIG. 3 is a flowchart illustrating a process of displaying the order of the plurality of video contents in the video processing apparatus in FIG. 1.

### DETAILED DESCRIPTION OF EXEMPLARY EMBODIMENTS OF THE INVENTION

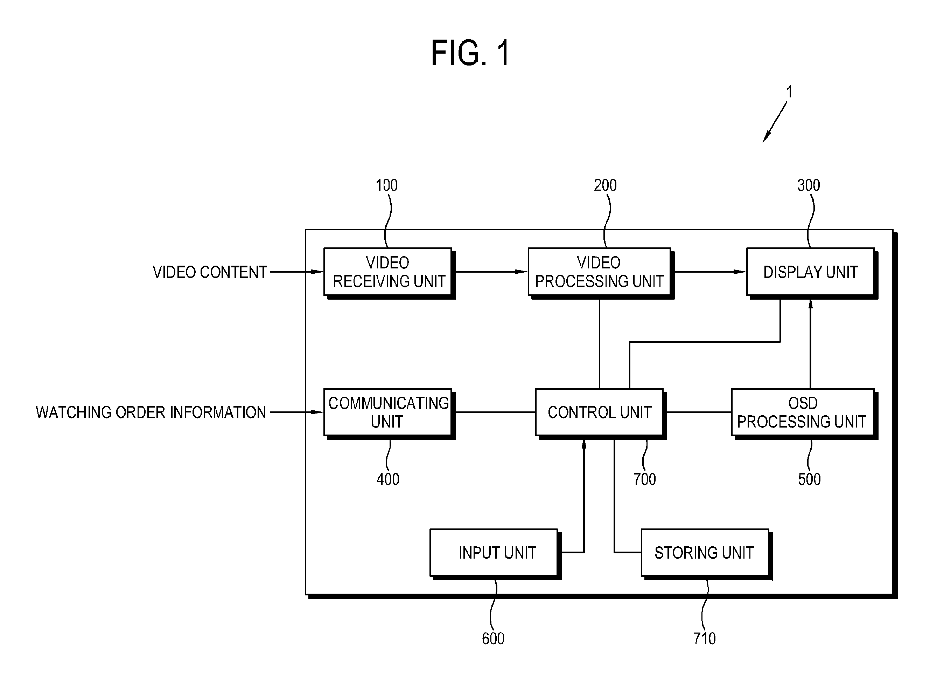

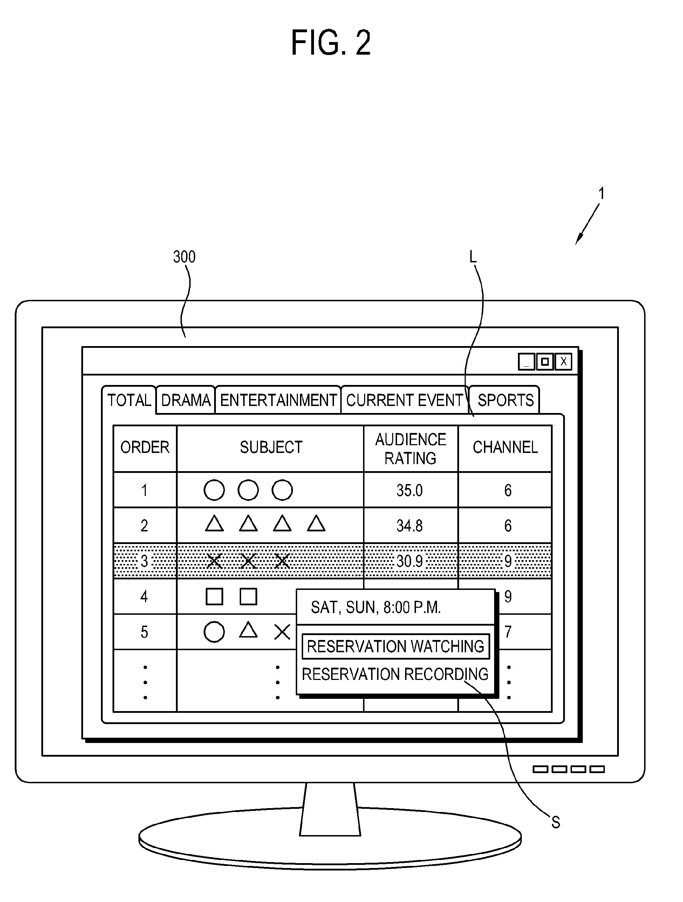

FIG. 1 is a block diagram illustrating a configuration of a video processing apparatus 1 according to an exemplary embodiment of the present invention, and FIG. 2 illustrates an example displaying an order of a plurality of video contents depending on watching order information in the video processing apparatus 1. The video processing apparatus 1 may be provided as a television, a set top box for a television, etc.

As shown in FIGs. 1 and 2, the video processing apparatus 1 according to the exemplary embodiment of the present invention includes a video receiving unit 100 receiving a video signal including a plurality of video contents, a video processing unit 200 processing the plurality of video contents included to the video signal, a display unit 300 displaying the video contents in a video, a communicating unit 400 receiving watching order information about respective video contents, and a control unit 700 controlling operations of the above elements, and displaying information about the plurality of video contents depending on the watching order.

Also, the video processing apparatus 1 may further include an on screen display (OSD) processing unit 500 processing the information about the video contents to be displayed in an on screen display (OSD) manner in the display unit 300, and an input unit 600 allowing one of the video contents displayed in OSD manner to be selected.

The video receiving unit 100 receives a video signal from an external video supplying source (not shown) under control of the control unit 700. In the present exemplary embodiment, the video receiving unit 100 receives the video signal including a plurality of video contents transmitted from a broadcasting station (not shown), but the present invention is not limited thereto. Alternatively, the video receiving unit 100 may receive a video signal from a video supplying source (not shown) of other types instead of the broadcasting station. Also, the video receiving unit 100 may receive the video signal having various formats such as an RCA format, a high definition multimedia interface (HDMI) format, a digital video interactive (DVI) format, etc., and may receive the video signal through a sky wave, a satellite antenna, a cable extended from the broadcasting station, etc.

The video processing unit 200 processes the video signal so that the video contents included in the video signal can be displayed in the display unit 300 as a video. The video signal received by the video receiving unit 100 includes the video contents of a plurality of channels. The video processing unit 200 displays at least one of the plurality of video contents on the display unit 300 under control of the control unit 700. The video processing unit 200 may perform a decoding corresponding to the format of the video signal, a video processing for improving a screen quality, a scaling for adjusting the size of the video, a screen adjustment by means of a user's demand, etc.

The display unit 300 displays the video signal processed by the video processing unit 200 as a video. The display unit 300 may be provided as a liquid crystal display or a plasma display panel, for example, but the type thereof is not limited thereto.

The communicating unit 400 is connected to a server (not shown) through a network, and receives a watching order information of the plurality of video contents received by means of the video receiving unit 100 from the server. Here, the watching order information is stored in the server or a client terminal (not shown) connected to the server, and the watching order information or an audience rating of the video contents corresponding thereto is received by the communicating unit 400 depending on an information demand of the communicating unit 400. Also, a category information such as genre of the video contents, a channel, etc. and additional related information may be stored in the server, and these informations may be received together when the watching order information is received by the communicating unit 400.

The communicating unit 400 may be provided as a wired or wireless local area network (LAN), a modem, etc., based on an internet protocol to communicate with the server. However, the present invention is not limited thereto.

The OSD processing unit 500 performs processing so that a list window L representing an order of the plurality of video contents can be displayed in the display unit 300 in an on screen display (OSD)manner, a pop-up manner or a picture in picture (PIP) manner based on the watching order information received from the communicating unit 400. Also, if one of the video contents displayed in the list window L is designated, the OSD processing unit 500 performs processing so that an option setting window S corresponding to the designated video content can be displayed under control of the control unit 700.

The input unit 600 transmits an input of a user to the control unit 700. The input unit 600 includes a menu key (not shown) or a remote controller (not shown) of the video processing apparatus 1. The input unit 600 enables the user to select one of the plurality of video contents displayed in an order in the list window L. Also, the input unit 600 enables the user to select one of a plurality of setting options displayed in the option setting window S corresponding to the selected video content, for example, one of the reservation watching and the reservation recording.

The control unit 700 receives the plurality of video contents through the video receiving unit 100, and demands and receives the watching order information of the plurality of video contents received through the communicating unit 400. Here, the control unit 700 may receive only the order information of each video content, or may receive the audience rating information of each video content to determine an order of the plurality of video contents. Also, the control unit 700 may receive additional information such as subject, genre and channel of the video contents through the communicating unit 400.

The control unit 700 displays the order of the plurality of video contents in the display unit 300 based on the watching order information. Here, the control unit 700 displays the additional information received through the communicating unit 400, for example, the subject, the channel, etc. of the video contents so that the user can easily recognize information of the corresponding video content.

The control unit 700 receives an input of a user from the input unit 600, and performs a setting corresponding thereto. For example, based on the category information such as the genre or the channel of the video contents, the control unit 700 may display only the order of the video contents corresponding to the category. If an input is received to display only a video content of a drama genre, the control unit 700 searches the additional information of the plurality of video contents, selects a video content of the drama genre, and then displays this depending on the watching order.

If one of the displayed video contents is selected, the control unit 700 controls the OSD processing unit 500 so that the corresponding video content can be displayed, or the option setting window S can be displayed. The option setting window S displays a plurality of function options related to the corresponding video content, and in the present exemplary embodiment, the two of the reservation watching and the reservation recording are illustrated. However, the present invention is not limited thereto, and various options may be used or added.

The control unit 700 controls the OSD processing unit 500 to further display a broadcasting time of the corresponding video content in the option setting window S so that a user can easily perform a reservation setting of the video content.

If either the reservation watching or the reservation recording is selected by means of the input unit 600, the control unit 700 performs the reservation watching or the reservation recording for the video content to correspond thereto in a corresponding broadcasting time. The control unit 700 includes a storing unit 710 for storing contents of the selected option.

For example, if the reservation watching of the video content is selected, the control unit 700 displays the video content in the display unit 300 at the corresponding broadcasting time. Here, if power of the video processing apparatus 1 is turned off, the control unit 700 may display the video content after turning on the power. If other video content is being displayed, the control unit 700 may stop displaying the other video content, and display the reserved video content. Also, the control unit 700 may control the OSD processing unit 500 so that a pop-up window informing that it is the broadcasting time of the reserved video content can be displayed on the display unit 300.

If the reservation recording of the video content is selected, the control unit 700 performs the reservation recording of the video content at the corresponding broadcasting time. Here, for recording the video content, an external device (not shown) such as a digital versatile disk (DVD) recorder may be connected to the video processing apparatus 1. Here, if power of the video processing apparatus 1 is turned off, the control unit 700 may turn on the power, and then perform the recording of the video content. Here, the control unit 700 may or may not display this video content in the display unit 300.

If other video content is being displayed, the recording may be performed while the video content is displayed in the display unit 300, or the recording of the corresponding video content may be performed while the displaying of the other video contents is maintained. Various changes may be applied to this control operation of the control unit 700.

If more than one reservation is stored in the storing unit 710 by means of the input unit 600, the control unit 700 retrieves this information from the storing unit 710, and displays it so that a user can confirm the reserved contents.

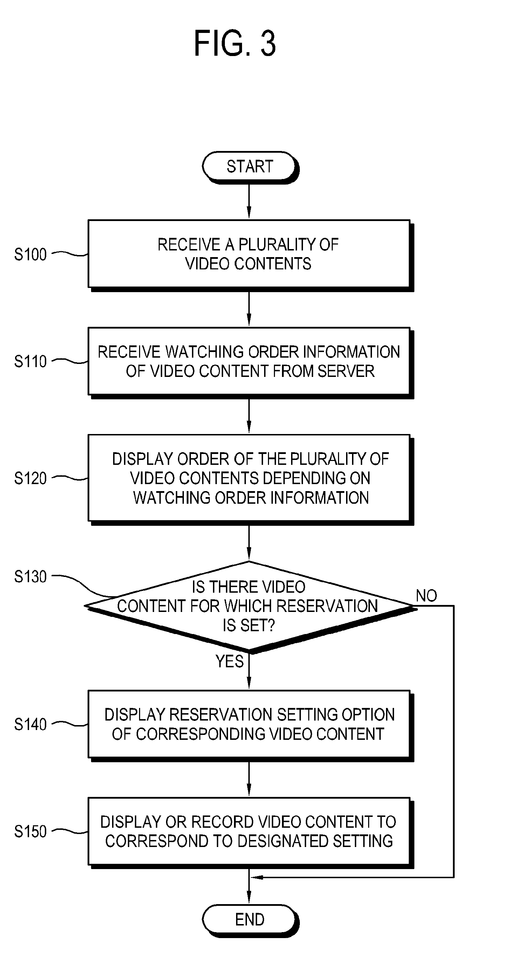

Hereinafter, in the video processing apparatus 1 according to the present exemplary embodiment, a method displaying an order of a plurality of video contents depending on a watching order information, and selecting a video content to perform a reservation setting will be described by referring to FIGs. 1 to 3.

A plurality of video contents from a broadcasting station (not shown) is received by means of the video receiving unit 100 (S100). The control unit 700 requests watching order information of the received plurality of video contents from a server (not shown), and the watching order information is received by means of the communicating unit 400 from the server (S110). Here, additional information of the video contents may be received also.

The control unit 700 displays an order of the plurality of video contents depending on the watching order information (S120). The control unit 700 controls the OSD processing unit 500 so that a list window L displaying the order of the plurality of video contents can be displayed in the display unit 300. Here, the control unit 700 may display the order of all the plurality of video contents, or may display the order of the video contents based on a category information such as genre, channel, etc. of the video contents.

A user confirms whether or not there is a video content to be reserved among the plurality of video contents (S130). The user selects the corresponding video content through the input unit 600.

The control unit 700 controls the OSD processing unit 500 so that an option setting window S for a reservation setting of the selected video content can be displayed in the display unit 300 (S140). The user selects one of the displayed reservation setting through the input unit 600, and the control unit 700 displays the video content, or performs a recording to correspond to the designated setting (S150).

As described above, in receiving the watching order information of the plurality of video contents from a broadcasting station, etc., the watching order information is received from a supplying source different from the source of the video contents, for example, a server (not shown) connected to the video processing apparatus 1 through a network. Also, the order of the plurality of video contents is displayed based on this order information so that a user can easily select a video content.

According to the present invention, content information about a plurality of video contents may be aligned and displayed depending on a watching order. Accordingly, it is convenient to search and select the video contents.

Also, an order for a plurality of video contents is capable of being displayed although audience rating information may not be supplied together with the video contents from a video supplying source.

Also, watching order information about a plurality of video contents may be variously accessed, thereby, desirably, improving reliability of the watching order information for aligning the plurality of video contents.

Also, a reservation watching and a reservation recording of a video content may be easily selected, most desirably making it easier to use an apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Video processing apparatus, comprising:
a video receiving unit (100) arranged to recieve at least one of a plurality of video contents from a predetermined video supplying source;
a video processing unit (200) arranged to process the video contents to be displayed on a display unit;
a communicating unit (400) arranged to receive watching order information of the video contents from a server; and
a control unit (700) arranged to display an order of the plurality of video contents on the display unit based on the received watching order information.

2. The video processing apparatus according to claim 1, wherein the watching order information comprises audience rating information of the video contents.

3. The video processing apparatus according to any preceeding claim, wherein the communicating unit is arranged to further receive category information which comprises at least one of a genre and a channel of the video contents, and
the control unit is arranged to display the order of the video contents based on the category information.

4. The video processing apparatus according to any of claims 1 to 3, further comprising an input unit arranged to receive an input of a user,
wherein the control unit is arranged to perform at least one of setting of a reservation watching and setting of a reservation recording for a video content which is designated by means of the input unit through the order of the plurality of video contents which are displayed in the display unit.

5. The video processing apparatus according to claim 4, wherein the control unit is arranged to further display a broadcasting time of the video content.

6. The video processing apparatus according to claim 4, wherein the control unit is arranged to display or record the video content to correspond to the setting of the reservation watching or the reservation recording.

7. A control method of a video processing apparatus arranged to receive and to process at least one of a plurality of video contents from a predetermined video supplying source, the control method comprising:
receiving watching order information (S110) of the video contents from a server; and
displaying an order of the plurality of video contents (S120) based on the watching order information.

8. The control method according to claim 7, wherein the receiving of the watching order information comprises receiving audience rating information of the video contents.

9. The control method according to any of claims 7 to 8, wherein the receiving of watching order information comprises receiving at least one of a genre and a channel of the video contents from the server, and the displaying of the order comprises displaying the order of the video contents based on the category information.

10. The control method according to any of claims 7 to 9, wherein the displaying of the order comprises:
designating at least one of a reservation watching and a reservation recording for at least one of the plurality of video contents through the displayed order of the plurality of video contents, and
performing a setting (S150) for the corresponding video content to correspond to the designated content.

11. The control method according to claim 10, wherein the performing the setting comprises displaying a broadcasting time of the video content.

12. The control method according to claim 10, wherein the performing the setting comprises displaying or recording the video content to correspond to the setting of the reservation watching or the reservation recording.
